## Europäisches Patentamt

## European Patent Office

## Office européen des brevets

(19)

(11) Veröffentlichungsnummer: **0 126 172**
**B1**

(12) # EUROPÄISCHE PATENTSCHRIFT

(45) Veröffentlichungstag der Patentschrift:
**08.04.87**

(51) Int. Cl.⁴: **G 01 L 1/26,** G 01 G 23/08

(21) Anmeldenummer: **83105002.6**

(22) Anmeldetag: **20.05.83**

(54) **Dämpfungsvorrichtung für Kraftaufnehmer.**

(43) Veröffentlichungstag der Anmeldung:
**28.11.84 Patentblatt 84/48**

(45) Bekanntmachung des Hinweises auf die Patenterteilung:
**08.04.87 Patentblatt 87/15**

(84) Benannte Vertragsstaaten:
**DE FR GB**

(56) Entgegenhaltungen:
EP-A-0 063 958
CH-A-531 168
DE-A-2 244 124
DE-B-2 753 549
GB-A-1 374 789

**Die Akte enthält technische Angaben, die nach
dem Eingang der Anmeldung eingereicht wurden
und die nicht in dieser Patentschrift enthalten sind.**

(73) Patentinhaber: **HOTTINGER BALDWIN
MESSTECHNIK GMBH, Im Tiefen See 45
Postfach 42 35, D-6100 Darmstadt (DE)**

(72) Erfinder: **Ort, Werner, Dr.rer.nat., Mozartweg 42,
D-6100 Darmstadt (DE)**

(74) Vertreter: **Brand, Fritz, Dipl.- Ing., Hottinger
Baldwin Messtechnik GmbH Patentabteilung Im
Tiefen See 45 Postfach 42 35, D-6100 Darmstadt
(DE)**

EP 0 126 172 B1

## Beschreibung

Die Erfindung betrifft eine Dämpfungsvorrichtung für einen Kraftaufnehmer mit einem durch die zu messende Kraft ausgelenkten und in der Wirkungsrichtung der Kraft beweglich geführten Teil.

Bei einer solchen, aus der DE-OS 22 44 124 bekannten Dämpfungsvorrichtung ragt das in der Kraftwirkungsrichtung bewegliche Teil in einen mit einem Dämpfungsmittel gefüllten Zylinder und besitzt dort die Gestalt eines Kolbens. Durch entsprechende Bemessung des Spaltes zwischen der Zylinderwand und dem Kolben und geeignete Auswahl des Dämpfungsmittels werden die Bewegungen des durch die zu messende Kraft ausgelenkten Teils in gewünschtem Maße gedämpft, was insbesondere bei Kraftaufnehmern, die mit niedriger Frequenz und geringer Eigendämpfung schwingen, notwendig ist, damit in kurzer Zeit das Meßergebnis zur Verfügung steht und um mechanische Störungen aus dem Umfeld zu unterdrücken. Um ein Auslaufen des Dämpfungsmittels, z.B. beim Transport zu verhindern, ist bei dieser Vorrichtung ein besonderer Verschluß für den Zylinder vorgesehen. Sieht man hierfür als Abschluß eine flexible Membran oder dergleichen vor, so treten Verfälschungen des Meßergebnisses zufolge barometrischer Effekte bzw. eine Temperaturabhängigkeit des Nullpunktes der mit dem Kraftaufnehmer durchzuführenden Messungen zufolge der Wärmedehnung des Dämpfungsmittels auf.

Es ist Aufgabe der Erfindung, die Nachteile des Standes des Technik zu vermeiden oder wesentlich zu vermindern. Dies wird bei einer Vorrichtung gemäß der eingangs bezeichneten Gattung dadurch erreicht, daß ein sich im wesentlichen senkrecht zur Kraftwirkungsrichtung erstreckender Zapfen in ein sich zum Zapfen koaxial erstreckendes, einseitig offenes und mit einem Dämpfungsmittel gefülltes Rohr hineinragt, daß eines dieser beiden Teile an seinem dem anderen Teil abgewandten Ende ortsfest gelagert und das andere Teil mit seinem dem ersten Teil abgewandten Ende starr mit dem in der Kraftwirkungsrichtung beweglich geführten Teil verbunden ist und daß der Spalt zwischen Zapfen und Rohr durch ein elastisches Glied, z.B. einen Faltenbalg, nach außen abgedichtet ist.

Das Vorteilhafte dieser Dämpfungsvorrichtung liegt in dem einfach herzustellenden gekapselten und damit auslaufsicheren System, bei dem keine barometrischen oder thermischen Einflüsse verfälschend auf die durch die aufzunehmende Kraft verursachte Bewegung einwirken. Bei entsprechender Dimensionierung kann die Dämpfungsvorrichtung darüberhinaus die Funktion eines Überlastanschlags für den Aufnehmer übernehmen.

Gemäß einer Weiterbildung der Erfindung sind das Rohr und der Zapfen der Dämpfungsvorrichtung zugleich als Differentialkondensator ausgebildet. Hierbei wird ein als Dämpfungsmittel wirkendes Dielektrikum verwendet, so daß man als weiteren Vorteil eine Erhöhung der Grundkapazitäten des Differentialkondensators und damit weniger Probleme mit Störkapazitäten erhält. Die Integration des Differentialkondensators in die Dämpfungsvorrichtung verhindert zudem eine Beeinträchtigung des Aufnehmersignals durch Staub oder Kondensation. Natürlich kann nach diesem Prinzip auch ein einfacher Kondensator realisiert werden mit entsprechend der Dieelektrizitätskonstanten des Dämpfungsmediums erhöhter Kapazität und Kapazitätsänderung bei Belastung des Aufnehmers.

Nachfolgend wird die Erfindung anhand von in den Zeichnungen schematisch dargestellten Ausführungsbeispielen erläutert. Es zeigen:

Fig. 1: teilweise aufgeschnitten einen Kraftaufnehmer mit integrierter Dämpfungsvorrichtung;

Fig. 2: eine Schnittdarstellung gemäß Linie A-B in Fig. 1;

Fig. 3: teilweise aufgeschnitten, einen Differentialkondensator-Kraftaufnehmer mit integrierter Dämpfungsvorrichtung und

Fig. 4: in größerem Maß-Stab eine Schnittdarstellung gemäß Linie C-D in Fig. 3.

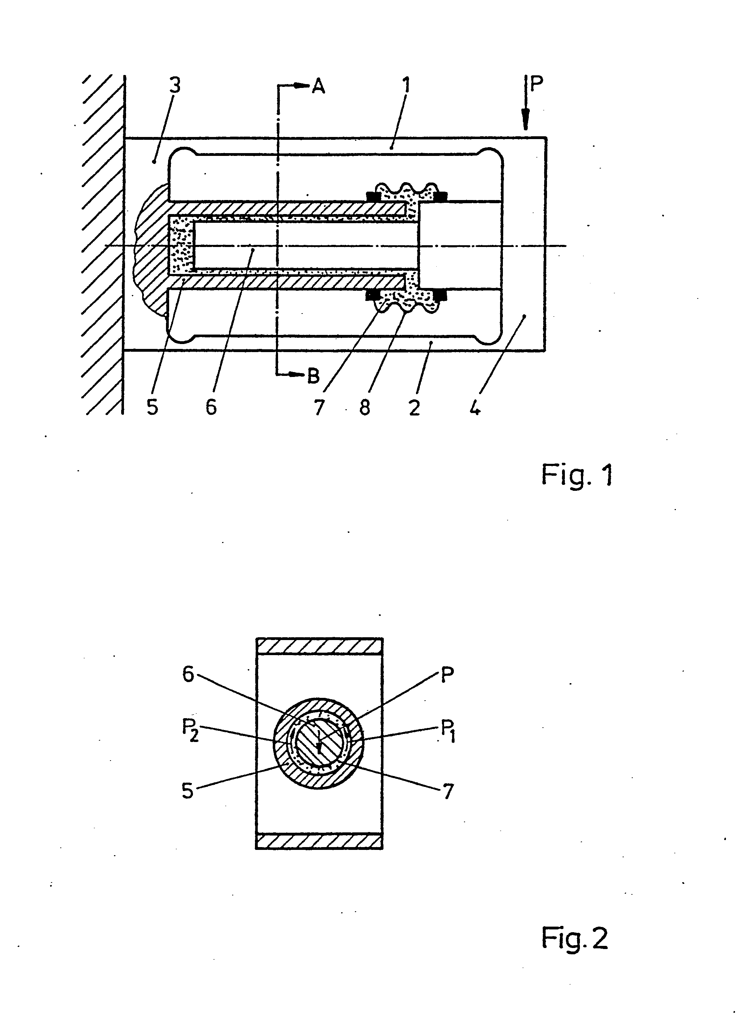

Der in den Figuren 1 und 2 dargestellte Kraftaufnehmer besteht aus zwei beispielsweise mit nicht dargestellten Dehnungsmeßstreifen versehenen, parallel zueinander verlaufenden Biegebalken 1, 2, die an ihrem einen Ende starr miteinander verbunden, ortsfest bei 3 gelagert sind. An ihrem anderen Ende sind die Biegebalken 1, 2 durch ein Verbindungsstück 4 ebenfalls starr miteinander verbunden. Das Verbindungsstück 4 ist somit in der Kraftwirkungsrichtung P beweglich geführt.

Zwischen den Biegebalken 1, 2 ist ein an seinem einen Ende bei 3 ebenfalls ortsfest gelagertes, sich im wesentlichen senkrecht zur Kraftwirkungsrichtung P erstreckendes Rohr 5 angeordnet, in das ein koaxial zum Rohr 5 verlaufender Zapfen 6 hineinragt, der an seinem anderen Ende starr mit dem Verbindungsstück 4 verbunden ist. Der Zwischenraum zwischen Rohr 5 und Zapfen 6 ist mit einem zähflüssigen Öl 7 ausgefüllt und nach außen durch einen elastischen Faltenbalg 8 abgedichtet.

Unter Krafteinwirkung bewegt sich der Zapfen 6 zusammen mit dem Verbindungsstück 4 in Richtung P und damit relativ zum ortsfesten Rohr 5 nach unten. Damit wird im Zwischenraum zwischen dem Zapfen 6 und dem Rohr 5 das Öl 7 nach oben in Pfeilrichtung P1 ,P2 verdrängt (Fig. 2). Die dabei entstehende innere Reibung bewirkt die gewünschte Dämpfung.

Im Gegensatz zu bekannten Dämpfungsvorrichtungen, bei denen - bei offener Ausführung - nachteilige Einflüsse durch Auslaufen des Dämpfungsmittels, Veränderungen der Viskosität durch Feuchtigkeitsaufnahme oder Verschmutzung oder - bei gekapselter Ausführung - durch sich in Kraftwirkungsrichtung auswirkende barometrische oder thermische Effekte eintreten, werden derartige Rückwirkungen auf das Aufnehmersignal bei der erfindungsgemäßen Dämpfungsvorrichtung vermieden.

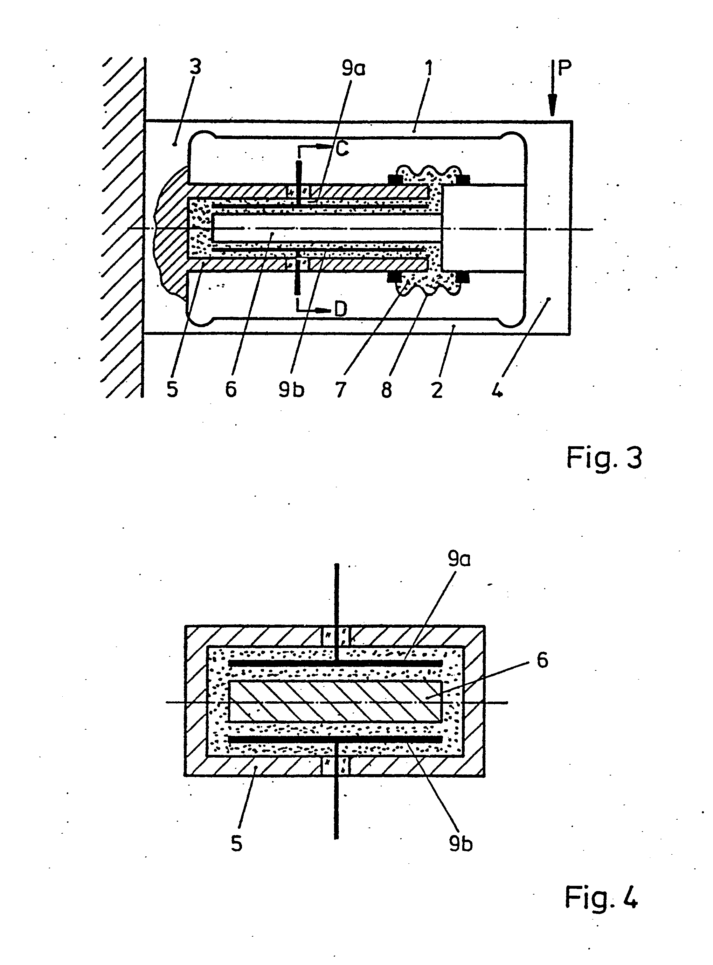

Das in den Figuren 3 und 4 dargestellte Ausführungsbeispiel ist im wesentlichen wie das in den Figuren 1 und 2 dargestellte Ausführungsbeispiel ausgebildet. Übereinstimmende Teile sind deshalb mit gleichen Bezugsziffern versehen. Bei diesem Differentialkondensator-Aufnehmer haben die Biegebalken 1 und 2 jedoch lediglich Führungsfunktion und sind daher nicht mit Dehnungsmeßstreifen oder optischen oder induktiven Mitteln zur Messung der durch die Kraft bewirkten Auslenkung versehen. Stattdessen sind am Rohr 5, das hier einen rechteckigen Querschnitt besitzt, elektrisch isolierte Kondensatorplatten 9a, 9b befestigt und der Zapfen 6 ist als Mittelelektrode des Differentialkondensators ausgebildet.

Bewegt sich unter Krafteinwirkung - wie zuvor beschrieben - der die Mittelelektrode bildende Zapfen 6 nach unten, so verändert sich in bekannter Weise das Verhältnis der Kapazität des oberen Teils des Differentialkondensators zur Kapazität des unteren Teils, wobei in vorteilhafter Weise - entsprechend der Dielektrizitätskonstanten des Dämpfungsmittels 7 - die Grundkapazitäten erhöht werden.

**Patentansprüche**

1. Dämpfungsvorrichtung für einen Kraftaufnehmer mit einem durch die zu messende Kraft ausgelenkten und in der Wirkungsrichtung der Kraft beweglich geführten Teil (4), dadurch gekennzeichnet, daß ein sich im wesentlichen senkrecht zur Kraftwirkungsrichtung erstreckender Zapfen (6) in ein sich zum Zapfen koaxial erstreckendes, einseitig offenes und mit einem Dämpfungsmittel (7) gefülltes Rohr (5) hineinragt, daß eines dieser beiden Teile (5 oder 6) an seinem dem anderen Teil abgewandten Ende ortsfest gelagert und das andere Teil (6 oder 5) mit seinem dem ersten Teil abgewandten Ende starr mit dem in der Kraftwirkungsrichtung beweglich geführten Teil (4) verbunden ist und daß der Spalt zwischen Zapfen und Rohr (5) durch ein elastisches Glied (8), z.B. einen Faltenbalg, nach außen abgedichtet ist.

2. Dämpfungsvorrichtung nach Anspruch 1, dadurch gekennzeichnet, daß das Rohr (5) und der Zapfen (6) zugleich als Elektroden (9a, 9b, 6) eines Differentialkondensators oder einfachen Kondensators ausgebildet sind.

3. Dämpfungsvorrichtung nach Anspruch 1, dadurch gekennzeichnet, daß die Auslenkung durch die Kraft mit Dehnungsmeßstreifen gemessen wird.

4. Dämpfungsvorrichtung nach Anspruch 1, dadurch gekennzeichnet, daß die Auslenkung durch die Kraft optisch gemessen wird.

5. Dämpfungsvorrichtung nach Anspruch 1, dadurch gekennzeichnet, daß die Auslenkung durch die Kraft induktiv gemessen wird.

**Claims**

1. A damping device for a force transducer having a part (4) which is deflected by the force to be measured and is guided for movement in the direction of action of the force, characterised in that a pin (6) extending substantially perpendicular to the direction of action of the force projects into a tube (5) extending coaxially to the pin, open at one side and filled with a damping medium (7), that one of these two parts (5 or 6) is mounted stationary at its end remote from the other part and the other part (6 or 5) is rigidly connected, by its end remote from the first part, to the part (4) which is guided for movement in the direction of action of the force, and that the gap between pin and tube (5) is sealed off from the outside by a resilient member (8), for example a bellows.

2. A damping device as claimed in Claim 1, chracterised in that the tube (5) and the pin (6) are both in the form of electrodes (9a, 9b, 6) of a differential capacitor or simple capacitor.

3. A damping device as claimed in Claim 1, craracterised in that the deflection as a result of the force is measured with strain gauges.

4. A damping device as claimed in Claim 1, characterised in that the deflection as a result of the force is measured optically.

5. A damping device as claimed in Claim 1, characterised in that the deflection as a result of the force is measured inductively.

**Revendications**

1. - Dispositif d'amortissement pour un capteur de forces comportant une pièce (4) déviée par la force à mesurer et guidée de façon à être mobile dans la direction d'action de la force, caractérisé en ce qu'une tige (6) s'étendant sensiblement orthogonalement à la direction d'action de la force pénètre dans un tube (5) s'étendant coaxialement par rapport à la tige, ouvert d'un côté et rempli d'un fluide amortissant (7), en ce que l'une de ces deux parties (5 ou 6) est montée fixement à son extrémité opposée à l'autre partie, tandis que l'autre partie (6 ou 5) est reliée rigidement, par son extrémité opposée à la première partie à la pièce (4) guidée de façon à être mobile dans la direction d'action de la force, et en ce que l'intervalle entre la tige et le tube (5) est isolé hermétiquement de l'extérieur par un organe élastique (3), par exemple un souflet.

2. - Dispositif d'amortissement selon la revendication 1, caractérisé en ce que le tube (5) et la tige (6) constituent en même temps des électrodes (9a, 9b, 6) d'un condensateur différentiel ou d'un condensateur simple.

3. - Dispositif d'amortissement selon la revendication 1, caractérisé en ce que la déviation sous l'effet de la force est mesurée au moyen de jauges extensométriques.

4. - Dispositif d'amortissement selon la revendication 1, caractérisé en ce que la déviation sous l'effet de la force est mesurée optiquement.

5. - Dispositif d'amortissement selon la revendication 1, cqractérisé en ce que la déviation sous l'effet de la force est mesurée inductivement.

Fig. 1

Fig. 2

Fig. 3

Fig. 4